(19) Europäisches Patentamt
European Patent Office
Office européen des brevets

(11) **EP 2 625 548 B1**

(12) **FASCICULE DE BREVET EUROPEEN**

(45) Date de publication et mention
de la délivrance du brevet:
**25.02.2015 Bulletin 2015/09**

(51) Int Cl.:
***G01T 1/178*** *(2006.01)*

(21) Numéro de dépôt: **11767996.9**

(86) Numéro de dépôt international:
**PCT/EP2011/067578**

(22) Date de dépôt: **07.10.2011**

(87) Numéro de publication internationale:
**WO 2012/045870 (12.04.2012 Gazette 2012/15)**

(54) **SYSTEME IN SITU DE MESURE DIRECTE D'UN RAYONNEMENT ALPHA ET PROCEDE ASSOCIE POUR LA QUANTIFICATION DE L'ACTIVITE DE RADIONUCLEIDES EMETTEURS ALPHA EN SOLUTION**

IN-SITU-SYSTEM FÜR DIE DIREKTE MESSUNG EINER ALPHA-STRAHLUNG UND ZUGEHÖRIGES VERFAHREN ZUR QUANTIFIZIERUNG DER AKTIVITÄT VON ALPHA-EMITTIERENDEN RADIONUKLEIDEN IN EINER LÖSUNG

IN SITU SYSTEM FOR THE DIRECT MEASUREMENT OF AN ALPHA RADIATION, AND RELATED METHOD FOR QUANTIFYING THE ACTIVITY OF ALPHA-EMITTING RADIONNUCLIDES IN A SOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2010 FR 1058151**

(43) Date de publication de la demande:
**14.08.2013 Bulletin 2013/33**

(73) Titulaire: **Commissariat à l'Énergie Atomique et aux Énergies Alternatives**
**75015 Paris (FR)**

(72) Inventeur: **SAUREL, Nicolas**
**F-21490 Varois et Chaignot (FR)**

(74) Mandataire: **Ilgart, Jean-Christophe et al**
**BREVALEX**
**95, rue d'Amsterdam**
**75378 Paris Cedex 8 (FR)**

(56) Documents cités:
**DE-A1- 19 648 211      GB-A- 1 253 636**
**GB-A- 2 404 780**

- **DATABASE COMPENDEX [Online] ENGINEERING INFORMATION, INC., NEW YORK, NY, US; janvier 2004 (2004-01), CHEN L ET AL: "Monte-Carlo computation of the calibration factor of solid state nuclear track detector for radon and the effect by atmospheric pressure", XP002638757, Database accession no. E2004258227139 & YUANZINENG KEXUE JISHU/ ATOMIC ENERGY SCIENCE AND TECHNOLOGY JANUARY 2004 ATOMIC ENERGY PUBLISHING HOUSE CN, vol. 38, no. 1, janvier 2004 (2004-01), pages 74-78,**
- **VOJTYLA P: "Calibration of monitors used for surveillance of radioactivity in effluent water from CERN's accelerator installations", APPLIED RADIATION AND ISOTOPES, ELSEVIER, OXFORD, GB, vol. 55, no. 1, 1 juillet 2001 (2001-07-01), pages 81-88, XP004234047, ISSN: 0969-8043, DOI: DOI:10.1016/S0969-8043(00) 00361-4**
- **KHAN H A ET AL: "SSNTD Applications in Science and Technology - A Brief Review", RADIATION MEASUREMENTS, ELSEVIER, AMSTERDAM, NL, vol. 31, no. 1-6, 1 juin 1999 (1999-06-01), pages 25-36, XP004217772, ISSN: 1350-4487, DOI: DOI:10.1016/S1350-4487(99) 00093-1**

## Description

### DOMAINE TECHNIQUE

L'invention concerne la quantification in situ de l'activité des radionucléides émetteurs alpha présents dans un effluent par un système de mesure du rayonnement alpha non destructive et son procédé de mesure associé.

### ÉTAT DE LA TECHNIQUE ANTÉRIEURE

On s'intéresse ici à la quantification de l'activité des radioéléments émetteurs alpha contenus dans certains effluents par mesure du rayonnement alpha dégagé par ces effluents. Cette quantification est nécessaire pour réaliser le suivi matière (aspect sûreté) et pour effectuer le traitement de l'effluent (par exemple, pour savoir si l'effluent peut être transporté ou non vers un centre de retraitement, quelle filière de retraitement est adéquate, ...).

On précise que la mesure du rayonnement alpha a comme intérêt certain, par rapport à la mesure du rayonnement gamma, d'avoir une limite de détection beaucoup plus basse et de s'affranchir de corrections d'atténuation complexes.

On rappelle par ailleurs qu'un effluent désigne tout rejet liquide véhiculant une charge polluante (dissoute ou sous forme de particules) nuisible à l'environnement. Les effluents regroupent par exemple l'ensemble des eaux usées, traitées ou non, provenant d'une usine de traitement des eaux (par exemple les eaux d'égouts ou les rejets industriels). On rappelle que les ordres de grandeurs recherchés pour de telles quantifications varient de quelques centaines de $Bq/m^3$ à $1.10^5$ $Bq/m^3$ sur les radionucléides U, Pu, Am.

Actuellement, la quantification de l'activité alpha des effluents se fait en plusieurs étapes : prélever un volume d'échantillon d'effluent, acheminer ce prélèvement vers un laboratoire d'analyse et, une fois arrivé au laboratoire, prélever une partie du volume d'échantillon afin de l'analyser. L'analyse est réalisée en effectuant un dépôt sur coupelle du volume d'échantillon. On rappelle que le dépôt sur coupelle consiste à évaporer un liquide par chauffage. Les résidus déposés sur la coupelle à la fin de la manipulation sont mesurés et on quantifie l'activité alpha des résidus, en utilisant par exemple un détecteur du type compteur à grille ou un détecteur semiconducteur de type silicium PIPS (pour « Passivated Implanted Planar Silicon » en anglais). Ce procédé implique généralement l'utilisation d'un traceur radioactif, ce qui implique un approvisionnement en matériaux nucléaires de référence et une génération de déchets nucléaires supplémentaires.

L'inconvénient de ce mode opératoire est qu'il nécessite un prélèvement d'effluent. Le procédé de mesure est donc destructif.

De plus, ce mode opératoire nécessite l'intervention de plusieurs opérateurs pour le prélèvement de l'échantillon, son transport et son analyse Il est aussi connu de surveiller la radioactivité des eaux rejetées dans l'environnement au moyen d'un détecteur préalablement calibré sur la base d'un code Monte Carlo. Cette technique est decrite dans Vojtyla P, "Calibration of monitors used for survellance of radioactivity in effluent water from CERN's accelerator installations", Applied Radiation and Isotopes 55 (2001), pages 81-88.

L'inventeur s'est donc fixé comme but de concevoir un système et un procédé de mesure qui permettent de quantifier l'activité alpha d'un effluent de manière non destructive et in situ, en solution.

### EXPOSÉ DE L'INVENTION

Ce but est atteint grâce à un système de mesure nucléaire in situ du rayonnement alpha d'un effluent, comprenant :

-   M détecteurs semiconducteurs en diamant de type CVD, c'est-à-dire obtenu par dépôt chimique en phase vapeur (« Chimical Vapor Déposition » en anglais), ou en silicium recouvert d'une couche de diamant et rendu opaque à la lumière visible (c'est-à-dire pour une longueur d'onde située entre 400 et 800 nm), appelés détecteurs du rayonnement alpha, destinés à être immergés dans l'effluent et aptes à mesurer un rayonnement alpha émis par ledit effluent, M étant un nombre entier supérieur ou égal à 1 ;
-   P voies de mesure reliées aux M détecteurs du rayonnement alpha, P étant un nombre entier, supérieur ou égal à 1 et inférieur ou égal à M, chacune des P voies de mesure étant aptes à fournir une valeur ou une somme des valeurs d'activité alpha issue(s) du ou des détecteurs du rayonnement alpha auxquels elles sont reliées ;

le système comprenant en outre, si P est supérieur à 1, un moyen pour additionner les résultats issus des P voies de mesure, et dans lequel les M détecteurs du rayonnement alpha sont étalonnées individuellement par un code de transport de particules $\alpha$ basé sur la méthode de Monte-Carlo, les détecteurs du rayonnement alpha reliés à une même voie de mesure étant étalonnés de la même manière ; le système de mesure selon l'invention comprenant en outre un détecteur semiconducteur monocristallin, appelé détecteur de spectrométrie, destiné à être immergé dans l'effluent et permettant d'identifier et de quantifier la proportion des éléments émetteur d'activité alpha présents dans l'effluent.

Les détecteurs semiconducteurs en diamant de type CVD ou en silicium recouvert d'une couche de diamant sont respectivement des détecteurs en diamant obtenus par dépôt chimique en phase vapeur, ou des détecteurs en silicium de type SOI (pour « Silicon On Insulator) mono ou polycristallins sur lesquels on a déposé une couche de diamant obtenue par dépôt chimique en phase vapeur. En aucun cas il ne peut s'agir de détecteurs non sélectifs vis-à-vis du rayonnement alpha. Par exemple, un détecteur de rayonnement gamma de type HPGe (pour « Hyper Pur Germanium ») ne conviendrait pas.

Le principe de détection d'une particule $\alpha$ est la formation, dans un détecteur semi-conducteur, de paires électron-trou suite à l'impact de la particule $\alpha$ sur la surface du détecteur. Le nombre de paires électron-trou dépend de l'énergie de la particule $\alpha$, ce qui permet l'obtention d'un spectre en énergie. Les détecteurs SOI (pour « Silicon On Insulated » en anglais) et les détecteurs CVD (pour « Chimical Vapor Deposition » en anglais) mesurent l'énergie résiduelle déposée par la particule $\alpha$.

Le moyen pour additionner les résultats issus des P voies de mesure peut être, par exemple, une échelle de comptage classique d'analyse multicanaux.

Les M détecteurs du rayonnement alpha sont étalonnés individuellement par un code de calcul de transport de particules $\alpha$ basé sur la méthode de Monte-Carlo, les détecteurs du rayonnement alpha reliés à une même voie de mesure étant étalonnés de la même manière. La méthode Monte-Carlo est une méthode statistique de calcul qui permet dans notre cas de déterminer numériquement les coefficients d'étalonnage des détecteurs du rayonnement alpha.

Avantageusement, M est supérieur ou égal à 2. Le système de mesure comprend alors au moins deux détecteurs semiconducteurs du rayonnement alpha.

Avantageusement, P est égal à M. On a alors autant de voies de mesure que de détecteurs du rayonnement alpha : chacun des détecteurs du rayonnement alpha est donc étalonné individuellement. On peut donc ainsi, par exemple, obtenir le gradient de l'activité alpha de l'effluent et un étalonnage spécifique par phases d'effluent avec prise en compte des caractéristiques physicochimiques de chacune des phases de l'effluent.

Selon une variante particulière de l'invention, lorsque l'effluent comprend Q phases différentes, Q étant un nombre entier supérieur ou égal à 2, au moins deux détecteurs du rayonnement alpha sont disposés dans des phases différentes de l'effluent. Les phases sont différentes en termes de nature physicochimique, de densité, de salinité... Avantageusement, le système de mesure comprend au moins un détecteur du rayonnement alpha par phase d'effluent.

Préférentiellement, les M détecteurs du rayonnement alpha sont identiques. Cela permet de pouvoir comparer directement les résultats obtenus par ces M détecteurs du rayonnement alpha sans avoir à faire de calculs supplémentaires, par exemple pour repérer la présence d'un gradient d'activité.

Avantageusement, le détecteur semiconducteur monocristallin est choisi parmi un détecteur semiconducteur CVD ou SOI diamant. Pour identifier et quantifier la proportion des éléments émetteurs d'activité alpha, on positionne un dispositif spécifique devant le détecteur. Par exemple, on peut équiper le détecteur dédié à la spectrométrie d'un canal faisant passer une lame d'effluent d'épaisseur micrométrique devant ce dernier. Grâce aux informations fournies par ce détecteur dédié à la spectrométrie, on peut alors connaître l'activité alpha de chaque élément émetteur alpha contenu dans l'effluent.

Selon une seconde variante, parmi les M détecteurs du rayonnement alpha que comprend le système de mesure, un détecteur du rayonnement alpha est monocristallin, est relié à une première voie de mesure, choisie parmi les P voies de mesure, qui fournit une valeur de l'activité alpha et est relié à une seconde voie de mesure, différente des P voies de mesure, qui fournit la spectrométrie de l'effluent. Dans ce cas particulier, un même détecteur sert à la fois de détecteur du rayonnement alpha et de détecteur de spectrométrie. Pour avoir ces deux fonctions, le détecteur sera forcément un détecteur semiconducteur monocristallin ou SOI diamant.

Avantageusement, le système de mesure selon l'invention comprend en outre des moyens de maintien permettant de maintenir les M détecteurs du rayonnement alpha immergés et en des positions déterminées dans l'effluent.

Avantageusement, les moyens de maintien maintiennent au moins deux détecteurs du rayonnement alpha à des hauteurs différentes dans l'effluent.

Avantageusement, les moyens pour maintenir les M détecteurs du rayonnement alpha sont un arbre (par exemple un axe) comportant des ramifications au niveau desquelles sont disposés les M détecteurs du rayonnement alpha. Avantageusement, les M détecteurs du rayonnement alpha sont situés aux extrémités des ramifications. De préférence, il y a M ramifications.

De préférence, les ramifications sont mobiles sur l'arbre ; la distance entre les ramifications peut ainsi être modifiée et les détecteurs du rayonnement alpha peuvent ainsi être déplacés pour être fixés à une hauteur plus satisfaisante dans l'effluent.

Selon une variante, le détecteur de spectrométrie est fixé à l'un des moyens de maintien. Si les moyens de maintien sont un arbre avec M ramifications, cet arbre peut comprendre une ramification supplémentaire sur laquelle va venir se fixer le détecteur monocristallin de spectrométrie.

De préférence, le détecteur monocristallin ou SOI diamant de spectrométrie est disposé dans la partie haute du volume d'effluent, c'est-à-dire dans la partie de l'effluent la plus dépourvue de particules en suspension.

L'invention concerne également un procédé de mesure nucléaire in situ du rayonnement alpha d'un effluent. Ce procédé de mesure comprend les étapes consistant à :

- immerger dans l'effluent M détecteurs semiconducteurs en diamant de type CVD ou en silicium recouvert d'une couche de diamant aptes à mesurer l'activité alpha de l'effluent, M étant un nombre entier supérieur ou égal à 1, les M détecteurs du rayonnement alpha étant reliés à P voies de mesure, P étant un nombre entier supérieur ou égal à 1 et inférieur ou égal à M, lesdits M détecteurs semiconducteurs étant appelés détecteurs du rayonnement alpha ;
- étalonner les M détecteurs du rayonnement alpha, les détecteurs reliés à une même voie de mesure étant étalonnés de la même manière, l'étalonnage étant réalisé par un code de transport de particules $\alpha$ basé sur la méthode de Monte-Carlo ;
- recueillir P valeurs du rayonnement alpha à l'aide des P voies de mesure reliées auxdits M détecteurs du rayonnement alpha, la $i^{ème}$ valeur recueillie (avec i=1 à P) correspondant soit à la valeur issue d'un seul détecteur du rayonnement alpha, si la voie de mesure correspondante n'est reliée qu'audit détecteur du rayonnement alpha, soit à la somme des valeurs issues des détecteurs du rayonnement alpha reliés par ladite voie de mesure,
- si P est supérieur à 1, additionner les P valeurs du rayonnement alpha ; le procédé de mesure comprend en outre une étape consistant à réaliser une spectrométrie de l'effluent pour déterminer l'identité et la proportion des éléments émetteurs alpha présents dans l'effluent.

Dans le cas où P est égal à M, les valeurs recueillies correspondent aux valeurs obtenues par les détecteurs du rayonnement alpha, chaque détecteur du rayonnement alpha ayant alors sa propre voie de mesure : les valeurs recueillies par les P voies de mesure ne sont alors pas des sommes de valeurs provenant de plusieurs détecteurs du rayonnement alpha, mais les valeurs provenant directement de chaque détecteur.

Avantageusement, les M détecteurs du rayonnement alpha sont disposés à des hauteurs différentes dans l'effluent.

Selon une variante, lorsque l'effluent comprend Q phases différentes, Q étant un nombre entier supérieur à 2, au moins deux détecteurs du rayonnement alpha sont immergés dans des phases différentes. Avantageusement, on dispose au moins un détecteur du rayonnement alpha par phase différente. Ainsi, les M détecteurs sont disposés de manière à ce qu'il y ait au moins un détecteur du rayonnement alpha dans chaque phase de l'effluent.

De préférence, l'étape consistant à réaliser la spectrométrie de l'effluent est réalisée en immergeant un détecteur semiconducteur monocristallin ou en silicium recouvert d'une couche en diamant (SOI diamant) (c'est-à-dire un détecteur équipé, par exemple, d'un canal micrométrique) dans l'effluent et en recueillant les valeurs fournies par ledit détecteur semiconducteur monocristallin ou en silicium recouvert d'une couche en diamant (SOI diamant).

Le dispositif et le procédé selon l'invention permettent d'améliorer la quantification des émetteurs alpha présents dans les effluents radioactifs.

Comme nous l'avons vu dans le paragraphe dédié à l'art antérieur, la quantification des émetteurs alpha présents dans les effluents est actuellement réalisée par prélèvement d'un échantillon qui est analysé par des méthodes destructrices. Ces méthodes comportent de nombreux inconvénients, à savoir l'échantillonnage, le transport de l'échantillon radioactif, la nécessité de disposer d'un laboratoire nucléarisé pour effectuer l'analyse de l'échantillon, la méthodologie destructrice d'analyse et l'impossibilité d'une telle quantification lors d'émissions radioactives parasites (du fait, par exemple, de la forte présence du césium) et enfin la gestion des échantillons en tant que déchets nucléaires.

La solution pour résoudre les problèmes de l'art antérieur consiste à procéder à l'immersion directement dans l'effluent à caractériser de un à plusieurs capteurs de rayonnement alpha qui sont étalonnés numériquement, individuellement, spécifiquement et à chaque modification des propriétés physicochimique de la phase d'effluent dans laquelle ils sont immergés, sans procéder au retrait desdits capteurs de l'effluent.

L'originalité de l'invention est de combiner un ou plusieurs détecteurs de rayonnement alpha de type CVD ou SOI diamant, placés in situ dans l'effluent (le nombre de détecteurs étant ajustable en fonction du volume d'effluent à caractériser et de l'hétérogénéité de ce dernier), le couplage du ou des détecteurs à une voie de mesure fournissant une spectrométrie des émetteurs alpha en présence dans l'effluent, la quantification des émetteurs alpha grâce à un étalonnage numérique spécifique à chacun des détecteurs immergés, sans avoir à utiliser au préalable une source étalon et à retirer le capteur de l'effluent pour l'étalonner. L'étalonnage des détecteurs est rendu possible grâce aux propriétés de libre parcours moyen des particules alpha dans l'effluent et les données accessibles en ligne (salinité, pH, taux de remplissage, nombre de phases présentes...) sur l'effluent à caractériser.

Le fait d'avoir un étalonnage spécifique pour chaque capteur permet entre autres de prendre en compte les hétérogénéités présentes dans l'effluent. En effet, en positionnant judicieusement les capteurs dans l'effluent, il est alors possible d'obtenir la quantification des émetteurs alpha présents dans chaque phase d'effluent.

Les avantages du dispositif et du procédé selon l'invention sont nombreux.

Tout d'abord, ils permettent d'obtenir une quantification de l'activité des émetteurs alpha, même en présence d'autres radionucléides du fait d'une meilleure sélectivité des détecteurs utilisés, à savoir des détecteurs CVD ou SOI diamant.

D'autre part, on obtient une mesure en ligne (quantification et spectrométrie) du rayonnement alpha de l'effluent.

On obtient également de meilleures performances en termes de limite basse de quantification et de précision de mesure.

On obtient un dispositif dont la maintenance est facilitée, qui peut facilement être décontaminé et qui est facilement transportable, ce qui est impossible avec un dispositif de mesure de rayonnement gamma.

On évite l'utilisation de sources étalons générant des déchets radioactifs supplémentaires, puisque l'étalonnage est numérique. L'étalonnage selon l'invention est effectif et possible même en présence de fortes hétérogénéités dans l'effluent puisqu'il est possible de déplacer le détecteur dans chaque phase de l'effluent ou de positionner un détecteur dans chaque phase.Il est aussi évolutif puisqu'il permet de prendre en compte chaque modification des caractéristiques physico chimiques de l'effluent (adjonction d'un nouvel effluent dans la cuve, neutralisation de cette dernière,...).

Le dispositif et le procédé selon l'invention permettent de quantifier l'activité alpha des effluents. Ils peuvent par exemple être utilisés pour effectuer un suivi de l'activité alpha d'un effluent ou encore pour déclencher des opérations lorsque l'effluent possède la teneur requise en émetteurs alpha.

## BRÈVE DESCRIPTION DES DESSINS

L'invention sera mieux comprise et d'autres avantages et particularités apparaîtront à la lecture de la description qui va suivre, donnée à titre d'exemple non limitatif, et accompagnée des dessins annexés parmi lesquels :

- la figure 1 représente l'évolution du rapport bruit sur signal en fonction de l'énergie pour un détecteur semi-conducteur de rayonnement alpha dans de l'eau,
- la figure 2 représente un exemple de réalisation du système de mesure selon l'invention,
- la figure 3 représente un autre exemple de réalisation du système de mesure selon l'invention,
- la figure 4 représente un autre exemple de réalisation du système de mesure selon l'invention.

On précise que les éléments constitutifs des figures ne sont pas représentés à l'échelle.

## EXPOSÉ DÉTAILLÉ DE MODES DE RÉALISATION PARTICULIERS

Le système de mesure selon l'invention et le procédé associé permettent de mesurer, in situ et de manière non destructive, l'activité des radioéléments alpha présents en solution.

L'originalité de l'invention repose sur la combinaison de mesures nucléaires réalisées à l'aide d'un ou de plusieurs détecteurs semiconducteurs du rayonnement alpha de type CVD ou SOI diamant, rendus opaques à la lumière visible (400-800nm) et placés directement dans la solution à caractériser (effluent), et la détermination du coefficient d'étalonnage dudit ou desdits détecteurs de manière numérique (par code de calcul Monte-Carlo 3D de transport des particules alpha). Cette combinaison permet d'obtenir une mesure non destructive en ligne de l'activité alpha des radioéléments présents dans l'effluent, et en particulier dans toutes les phases de l'effluent (solutions propres et/ou dans les boues de décantation de l'effluent) lorsqu'on utilise plusieurs détecteurs disposés dans les différentes phases de l'effluent, et ainsi de tenir compte de la répartition des radioéléments dans l'effluent.

Le système de mesure et le procédé associé permettent non seulement de connaitre l'activité alpha globale d'un effluent, mais ils peuvent en outre fournir l'activité alpha radioélément par radioélément lorsque le système de mesure comporte un détecteur semiconducteur monocristallin de type diamant CVD ou SOI diamant dédié à la spectrométrie. Un tel détecteur semiconducteur monocristallin de type diamant CVD ou SOI diamant, associé à une voie de mesure permettant de réaliser la mesure spectrométrique de l'effluent, permet de connaître la proportion des radioéléments présents dans l'effluent. Ce détecteur semiconducteur monocristallin ou SOI diamant peut éventuellement servir à la fois à mesurer l'activité alpha et la spectrométrie de l'effluent.

Dans l'invention, la réalisation de l'étalonnage du ou des détecteurs dédiés à la mesure de l'activité alpha est obtenue par code de calcul Monte-Carlo 3D.

Soit S le signal (en impulsions par seconde) reçu par un détecteur déterminé et A l'activité volumique de l'effluent. On a alors la relation suivant :

$$A = F \times S$$

La fonction de transfert F, exprimée en m³, lie le signal à l'activité totale de l'effluent.

La fonction de transfert peut être décomposée comme suit :

$$F = [p(C/D) \times p(D/V_c) \times V_c]^{-1}$$

où

- p(C/D) est la probabilité que l'impulsion soit comptée par le détecteur, sachant que la particule est arrivée sur le détecteur (cette probabilité représente l'efficacité intrinsèque du détecteur) ;
- $p(D/V_c)$ est la probabilité qu'une particule émise dans le volume d'effluent contenu dans la cuve arrive sur le détecteur (cette probabilité représente l'efficacité géométrique du détecteur) ;
- $V_c$ est le volume d'effluent contenu dans la cuve.

La probabilité $p(D/V_c)$ est très faible à cause du faible parcours des particules alpha dans un liquide.

En posant $V_s$ l'événement « particule $\alpha$ émise dans le volume inférieur ou égal au parcours des particules $\alpha$ » et $V_{c-s}$ l'évènement « particules $\alpha$ émises dans le reste du volume d'effluent », la probabilité $p(D/V_c)$ devient :

$$p(D/V_c) = p(D/V_s) \times p(V_s) + p(D/V_{c-s}) \times p(V_{c-s})$$

Bien que la probabilité $p(V_{c-s})$ puisse être très grande, la probabilité $p(D/V_{c-s})$ est par définition nulle.

La fonction de transfert est alors :

$$F = [p(C/D) \times p(D/V_s) \times p(V_s) \times V_c]^{-1}$$

La probabilité $p(D/V_s)$ qu'une particule soit détectée, sachant qu'elle a été émise dans le volume $V_s$, définit l'efficacité géométrique rapportée au volume source.

La probabilité $p(V_s)$ est égale au rapport des volumes dans le cas d'une répartition d'activité homogène.

Le code de calcul Monte-Carlo 3D permet d'évaluer les grandeurs $p(V_s)$, $p(D/V_c)$ et $p(D/V_s)$.

Le rendement de détection (c'est-à-dire $p(C/D) \times p(D/V_c)$) peut alors être calculé par les formules précédentes.

Les caractéristiques physico chimique du volume de solution vu individuellement par chaque détecteur (comme la densité, la salinité, la nature de l'effluent (aqueux, organique, acide)...) doivent être prises en considération dans la modélisation de Monte-Carlo afin d'obtenir un rendement de détection le plus proche possible de la réalité.

Les M détecteurs du rayonnement alpha du système de mesure sont reliés à P voies de mesure, P étant un nombre entier supérieur ou égal à 1 et inférieur ou égal à M. On considérera que les détecteurs du rayonnement alpha qui sont reliés par une même voie de mesure présentent les mêmes caractéristiques physico-chimiques : les détecteurs reliés à une même voie de mesure seront donc étalonnés de manière identique. Si chaque détecteur du rayonnement alpha est relié à sa propre voie de mesure, chaque détecteur sera étalonné individuellement : il sera alors possible d'obtenir un étalonnage différent pour chaque détecteur, ce qui permet d'avoir un étalonnage au plus près du milieu dans lequel la mesure est réalisée (phase propre ou boue).

Pour le calcul du signal S, une autre donnée à déterminer est le nombre de canaux sur lequel le signal doit être intégré. Cette donnée influe directement sur la valeur de rendement de détection. Cette action permet d'optimiser le rapport signal à bruit.

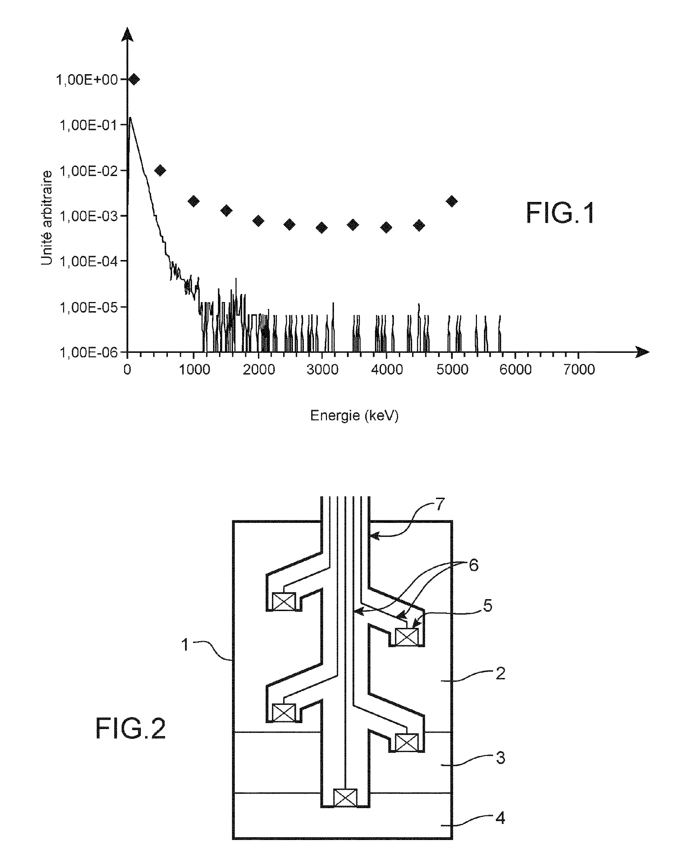

Par exemple, la figure 1 représente l'évolution du rapport bruit sur signal (impulsions mesurées par un détecteur semi-conducteur de rayonnement alpha en fonction de l'énergie, dans le cas où un tel détecteur est plongé dans de l'eau. Sachant que la plupart des particules $\alpha$ ont une énergie comprise entre 3000 et 7000 keV, le graphique est réalisé entre 0 et 7000 keV. Les carrés pleins représentent le rapport bruit/signal, tandis que la courbe en trait continu représente le bruit de fond mesuré par le détecteur. Pour le détecteur présenté sur la figure 1 lorsqu'il est placé dans de l'eau, on constate que le bruit de fond est minimal entre 2000 et 4800 keV : pour détecter le maximum de particules $\alpha$ dans de

l'eau, tout en ayant un rapport signal/bruit minimal, l'intégration est donc optimale entre 3000 et 6000 keV. Ainsi, un réglage précis du nombre de canaux à prendre en compte permet d'optimiser le rendement de détection et de réduire la limite de détection.

Le (ou les) détecteur(s) semiconducteur(s), une fois étalonné(s), est (sont) utilisé(s) pour mesurer l'activité alpha de l'effluent.

Dans le cadre de l'invention, le calcul permettant de remonter à l'activité totale $A_T$ d'un effluent est donné par la formule suivant :

$$A_T = \sum_{j=1\text{ à }M} A_j$$

M étant le nombre de détecteurs du rayonnement alpha du système de mesure et

$$A_j = \frac{N_j}{t \times V_j \times \varepsilon}$$

avec $N_j = N_B - N_0$

- $N_j$ étant le comptage sans bruit de fond (en impulsion) mesuré par le détecteur j,
- $N_B$ étant le comptage brut (en impulsion) mesuré par le détecteur j,
- $N_0$ étant le comptage du bruit de fond (en impulsion) mesuré par le détecteur j,
- t étant la durée du comptage (en seconde) par le détecteur j,
- $\varepsilon$ étant le rendement de détection du détecteur j,
- $V_j$ étant le volume vu par le détecteur j.

La mesure $A_j$ ainsi obtenue donne une valeur en Becquerel par $m^3$.

Il est à noter que les durées de comptage brut et de comptage du bruit de fond doivent être identiques pour que la formule ci-dessus soit valide.

Le nombre de détecteurs du rayonnement alpha compris dans le système de mesure selon l'invention permet d'augmenter les performances du système de mesure en termes de limite de détection. Ce nombre est à optimiser en fonction de la précision sur la mesure que l'on souhaite obtenir, du volume d'effluent et également du nombre de phases différentes identifiées à caractériser (il est préférable dans ce cas d'avoir au minimum un détecteur par phases différentes si le volume d'effluent le permet). Par exemple, plus le volume d'effluent sera grand et plus il sera nécessaire d'augmenter le nombre de détecteurs afin d'augmenter la précision de la mesure de l'activité.

Par ailleurs, outre pour l'augmentation de la précision de la mesure et de la détermination du coefficient d'étalonnage à utiliser, il est avantageux de disposer les détecteurs du rayonnement alpha à des hauteurs différentes dans l'effluent afin de détecter la présence d'un gradient d'activité, dans le cas où l'activité ne serait pas homogène dans tout l'effluent, par exemple dans le cas d'une décantation. En positionnant les détecteurs semiconducteurs alpha du dispositif de mesure à différents hauteurs dans la cuve, on obtient une bonne représentativité de la répartition de l'activité alpha dans la cuve. Le rendement de détection du dispositif de mesure n'est alors plus déterminé sur la totalité du volume de l'effluent, mais par tranche d'effluent couverte par chaque détecteur : au lieu de supposer que la répartition de l'activité alpha dans l'effluent est homogène, on suppose ici que la répartition de l'activité alpha est homogène radialement et sur toute la hauteur de la tranche « vue » par chaque détecteur semiconducteur alpha. On suppose également que la densité et la composition chimique de l'effluent sont constantes au sein d'une même tranche. Cette découpe en tranche permet donc de prendre en compte les éventuels gradients de densité présents dans la cuve et surtout de pouvoir réaliser une mesure dans les dépôts de fond de cuve avec un rendement de détection spécifique. On peut alors réduire l'incertitude sur l'activité alpha et mieux prendre en compte les paramètres influant sur la détermination de l'activité alpha en réduisant les aléas dus à la prise d'échantillons.

La présence d'un gradient dans la cuve se repère aisément par la présence d'une variation du signal entre les détecteurs du rayonnement alpha lorsque les détecteurs du rayonnement alpha sont identiques et reliés à des voies de comptage différentes (une voie de comptage pour chaque détecteur du rayonnement alpha). C'est pour cela qu'il est préférable d'utiliser des détecteurs du rayonnement alpha identiques.

Ce gradient, du haut vers le bas de la cuve, peut être dû soit à la décantation des émetteurs alpha dans la cuve (surtout valable pour les effluents actifs aqueux, de pH neutres), soit à la décantation des matières en suspension présentes dans la cuve.

Si le premier cas se présente, alors le gradient de signal augmentera en fonction de la profondeur de la cuve. Dans le second cas, ce même gradient diminuera. La combinaison des deux effets contrebalance le gradient.

Ainsi, un gradient positif entre deux tranches d'effluent vues par deux détecteurs du rayonnement alpha situés à des hauteurs différentes se traduira dans la modélisation de Monte-Carlo par une augmentation du taux d'émission, identique au rapport du signal obtenu entre ces deux tranches.

Pour un gradient négatif, ce sera la masse volumique apparente qui sera augmentée en fonction du rapport du signal entre les deux tranches.

Pour un gradient nul, la modélisation de la tranche sera un compromis entre les deux effets.

Outre le ou les détecteurs du rayonnement alpha, le système de mesure selon l'invention peut également comprendre un détecteur chargé de déterminer la spectrométrie de l'effluent et ainsi d'identifier les radioéléments émetteurs alpha présents dans l'effluent.

Ce détecteur dédié à la spectrométrie de l'effluent est un détecteur semi-conducteur monocristallin, de type CVD ou SOI diamant. Ce détecteur est de préférence situé dans la partie haute de la cuve, c'est-à-dire dans la partie la plus propre de l'effluent contenu dans la cuve. Nous faisons l'hypothèse que le rapport isotopique entre les différents radioéléments émetteurs alpha est constant dans toute la cuve. Le détecteur monocristallin ou SOI diamant doit en outre avoir un diamètre minimum de 1 pouce afin d'avoir une limite de détection compatible avec l'activité de la cuve (limite de détection de l'ordre de 100000 Bq par $m^3$ pour des particules $\alpha$ ayant des énergies allant de 4 à 6 MeV).

On peut alors déterminer, en première approximation, pour chaque activité $A_j$ détectée par les M détecteurs du rayonnement alpha, la proportion de l'activité par radioélément émetteur alpha :

$$A_n \;=\; \%_n \;\;x\;\; A_j$$

où $A_n$ est l'activité alpha du radioélément émetteur alpha n et $\%_n$ est la proportion du radioélément n dans l'effluent par rapport aux autres radioéléments émetteurs alpha.

La proportion $\%_n$ est déterminée à partir du spectre obtenu par le détecteur de spectrométrie selon le rapport suivant :

$$\%_n \;=\; N_n / N_T$$

$N_n$ étant le signal obtenu pour le radioélément n (par les techniques habituelles de déconvolution de spectre) et $N_T$ étant le signal obtenu dans la zone du spectre contenant tous les radioéléments émetteurs alpha (c'est-à-dire sur le nombre de canaux utilisé pour la détermination de l'information isotopique).

On peut également déterminer directement la proportion de l'activité totale par radioélément émetteur alpha à partir de la formule suivante :

$$A_n \;=\; \%_n \;\;x\;\; A_T$$

Cependant, la mesure ainsi obtenue sera précise à la condition qu'il n'y ait pas ou peu de gradient dans l'activité de l'effluent.

La figure 2 représente une cuve 1 contenant un effluent ayant trois phases 2, 3, 4 différentes et dans laquelle est introduit un exemple de réalisation d'un système de mesure selon l'invention. Dans cet exemple, le système de mesure comporte cinq détecteurs du rayonnement alpha 5 (représentés par des rectangles contenant une croix), maintenus dans l'effluent par un moyen de maintien 7 ayant la forme d'un arbre, c'est-à-dire un axe central et des ramifications. Ici, les détecteurs du rayonnement alpha 5 sont reliés à cinq voies de mesure 6, un pour chaque détecteur et les cinq voies de mesure 6 sont reliées à un moyen additionneur (non représenté) (par exemple un analyseur multicanaux, une échelle de comptage...) . Dans cet exemple, les détecteurs du rayonnement alpha 5 sont disposés aux extrémités des ramifications de l'arbre et sont ainsi maintenus à des hauteurs déterminées dans l'effluent. En particulier, l'effluent comporte ici trois phases différentes : une phase claire située dans la partie haute de la cuve et dans laquelle sont situés trois détecteurs du rayonnement alpha, une phase trouble dans laquelle est situé un détecteur du rayonnement alpha et une phase de boues dans laquelle est situé un détecteur du rayonnement alpha.

Les moyens de maintien sont de préférence conçus pour permettre le passage des différents câblages utiles au bon fonctionnement des détecteurs (alimentation haute tension, basse tension, transport du signal...). Dans cet exemple, l'armature de l'arbre est creuse et sert au passage des différents câbles.

Ici, les détecteurs sont insérés dans les extrémités des ramifications de sorte que seule la partie active des détecteurs est en contact avec l'effluent.

L'arbre est de préférence étanche et résistant aux composés acides ou basiques.

Dans cet exemple de réalisation, les moyens de maintien sont un arbre, mais tous moyens permettant de maintenir le ou les détecteurs du rayonnement alpha en une position déterminée dans la cuve conviennent. Par exemple, les moyens de maintien peuvent être une tige hélicoïdale sur laquelle on viendrait fixer les détecteurs du rayonnement alpha.

Les détecteurs du rayonnement alpha sont de préférence situés loin des bords de la cuve afin de faciliter leur étalonnage en évitant de devoir prendre en compte les « effets de bords ».

Selon un autre exemple de réalisation du système de mesure selon l'invention, un effluent actif de 3 m$^3$ est contenu dans une cuve ayant une hauteur de 2,3 m et un diamètre de 1,3 m. Pour un tel conteneur, un nombre de 10 détecteurs du rayonnement alpha est optimal d'un point de vue coût du système de mesure et performance dudit système de mesure (limite de détection).

Avec un tel système de mesure, une moyenne d'un point de mesure tous les 23 cm de hauteur de cuve est obtenue. Cette moyenne est bien sûr à pondérer en fonction des points caractéristiques que l'on souhaite quantifier, notamment le détecteur le plus en profondeur sera directement positionné dans les boues de décantation, le suivant dans la phase trouble située au dessus des boues, etc...

Une première étude de cette cuve, et surtout de son contenu, permet de déterminer le nombre de phases différentes présentes dans la cuve. Le remplissage et la salinité de la cuve sont par exemple suivis en ligne par un indicateur de niveau et une mesure de la salinité.

Une fois remplie avec la totalité de l'effluent à analyser, le niveau de la cuve détermine quels détecteurs sont à activer, c'est-à-dire quels détecteurs sont totalement immergés dans l'effluent, et la salinité est un indicateur de la masse volumique apparente à entrer dans la modélisation 3D pour la réalisation de l'étalonnage numérique des détecteurs. Le résultat de cet étalonnage numérique fournit les rendements de détection des dix détecteurs qui leur sont donc appliqués individuellement. Dans le cas d'effluents actifs, non acides, le recours à des détecteurs semi-conducteurs de type PIPS est possible à la condition expresse que la cuve ou le détecteur soit opaque à la lumière du jour. Dans le cas contraire, ou pour des cuves ayant de forts pH, il faut utiliser des détecteurs de type SOI diamant ou CVD polycristallin ou monocristallin.

D'autres exemples de réalisation sont décrits ci-dessous.

Selon un premier exemple de réalisation, le système de mesure comprend dix détecteurs du rayonnement alpha, de type SOI diamant ou de type CVD, disposés dans une cuve et dix voies de mesure indépendantes, chaque voie de mesure étant associée à un détecteur du rayonnement alpha. Les dix voies de mesure sont reliées à un moyen additionneur non représenté. Les détecteurs du rayonnement alpha sont espacés les uns des autres dans le sens de la hauteur de la cuve, de manière à ce que les différentes phases de l'effluent puissent être mesurées.

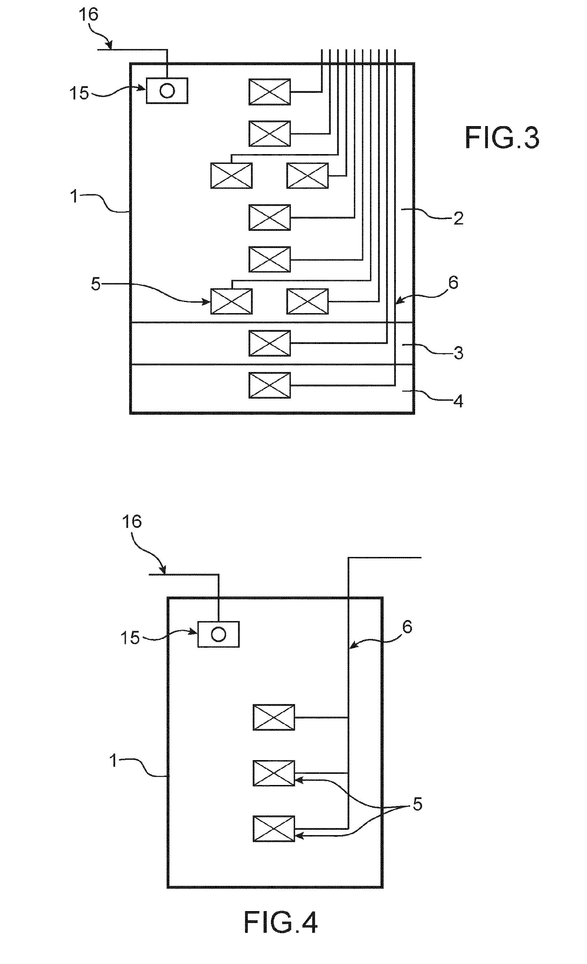

Selon un second exemple de réalisation, représenté dans la figure 3, le système de mesure est plongé dans une cuve 1 comprenant un effluent ayant trois phases différentes 2, 3, 4. Le système de mesure comprend, comme dans l'exemple précédent, dix détecteurs du rayonnement alpha 5 (représentés par des rectangles comprenant une croix), de type SOI diamant ou de type CVD. Il comprend en outre un détecteur monocristallin 15, de type CVD ou SOI diamant, dédié à la spectrométrie de l'effluent (représenté par un rectangle comprenant un rond). Il y a onze voies de mesures indépendantes 6 et 16, une pour chaque détecteur et les dix voies de mesures 6 reliés aux détecteurs du rayonnement alpha 5 sont reliés à un moyen additionneur non représenté. Le détecteur dédié à la spectrométrie 15 est placé dans la partie haute de la cuve 1, c'est-à-dire dans la partie de l'effluent comprenant le moins de matières en suspension. On précise que les moyens de maintien ne sont pas représentés dans la figure 3.

Selon un troisième exemple, représenté dans la figure 4, on réalise un système de mesure adapté pour quantifier l'activité alpha d'un effluent compris dans un conteneur de quelques centaines de cm$^3$. Par exemple, le conteneur 1 est un flacon de type SG500 de 8 cm de haut et de 9 cm de diamètre. Le système de mesure comprend par exemple trois détecteurs du rayonnement alpha 5, de type SOI diamant ou CVD, un détecteur CVD monocristallin 15 dédié à la spectrométrie et deux voies de mesure (une voie de mesure 6 pour les trois détecteurs du rayonnement alpha 5 et une voie de mesure 16 pour le détecteur dédié à la spectrométrie 15). Les détecteurs du rayonnement alpha sont disposés à différentes hauteurs dans le flacon. On précise que les moyens de maintien ne sont pas représentés dans la figure 4.

Dans les trois exemples ci-dessus, le choix entre les détecteurs SOI diamant et les détecteurs CVD pour les détecteurs destinés à la quantification de l'activité alpha se fait en fonction du conteneur et en fonction de l'activité alpha à quantifier. En effet, si l'on souhaite quantifier des effluents ayant une activité alpha inférieure à 18,6 M Bq/m$^3$, il est préférable que les détecteurs semiconducteurs soient des détecteurs polycristallins de type SOI diamant d'une surface minimum de 1 pouce$^2$ (c'est-à-dire 2,54 cm$^2$). Dans ce cas, le conteneur (cuve ou flacon) devra être un conteneur opaque à la lumière ou bien le détecteur SOI devra être rendu opaque à la lumière visible.

Au contraire, si l'on souhaite quantifier des effluents ayant une très haute activité alpha, c'est-à-dire une activité supérieure à 18,6 M Bq/m$^3$, les détecteurs semiconducteurs seront de préférence des détecteurs polycristallin de type CVD.

Un des avantages de l'invention est qu'elle s'applique aussi bien à des radioéléments émetteurs alpha présents dans des conteneurs contenant plusieurs mètres cubes ou quelques centimètres cubes d'effluents, qu'à des effluents neutres, basiques ou acides, ainsi qu'à des activités alpha faibles, fortes ou très fortes.

Un autre avantage du système de mesure selon l'invention et du procédé de mesure associé est qu'ils permettent de mesurer l'activité alpha dans des cuves d'effluents à différents niveaux de la cuve et dans toutes les phases présentes dans la cuve (solution propre et boues). On obtient ainsi une mesure plus précise de l'activité alpha de l'effluent et il est possible de connaître le gradient de l'activité alpha de l'effluent au sein de la cuve.

Le système de mesure et le procédé selon l'invention présentent de nombreux autres avantages par rapport à l'art antérieur.

Tout d'abord, dans l'art antérieur, la mesure est réalisée sur un prélèvement d'un prélèvement d'effluent et de plus, on ne peut exploiter que la phase propre de l'effluent. On s'expose alors à obtenir un résultat d'activité biaisé, non représentatif de l'activité réelle de l'effluent dans l'ensemble de la cuve. Avec le système de mesure et le procédé associé selon l'invention, la représentativité de la mesure de l'activité alpha est beaucoup plus proche de la valeur réelle.

Par ailleurs, grâce au système de mesure selon l'invention, on peut identifier et suivre en ligne l'activité des radioéléments émetteurs alpha présents dans l'effluent. On peut en outre prendre en compte la répartition de l'activité à tous les niveaux de la cuve grâce à une mesure d'activité par tranche homogène de cuve.

D'autre part, le temps nécessaire à l'obtention d'une mesure d'activité alpha est réduit par rapport à l'art antérieur (la mesure directement dans la cuve remplace le prélèvement, le transport et l'analyse du prélèvement).

De plus, on élimine les transports de matières nucléaires : dans l'art antérieur, chaque prélèvement effectué nécessite la réalisation d'un transport nucléaire, puis fait l'objet d'une gestion particulière comme matière nucléaire.

Enfin, avec une méthode de mesure in situ, il est possible de réaliser un suivi matière plus fréquent qu'avec une méthode hors ligne.

**Revendications**

1. Système de mesure nucléaire in situ du rayonnement alpha d'un effluent, comprenant:

   - M détecteurs semiconducteurs en diamant obtenus par dépôt chimique en phase vapeur ou en silicium recouvert d'une couche de diamant, appelés détecteurs du rayonnement alpha (5), destinés à être immergés dans l'effluent et aptes à mesurer directement un rayonnement alpha émis par ledit effluent, M étant un nombre entier supérieur ou égal à 1 ;
   - P voies de mesure (6) reliées aux M détecteurs du rayonnement alpha, P étant un nombre entier, supérieur ou égal à 1 et inférieur ou égal à M, chacune des P voies de mesure étant aptes à fournir une valeur ou une somme des valeurs d'activité alpha issue(s) du ou des détecteurs du rayonnement alpha (5) auxquels elles sont reliées,

   le système comprenant en outre, si P est supérieur à 1, un moyen pour additionner les résultats issus des P voies de mesure
   et dans lequel les M détecteurs du rayonnement alpha (5) sont étalonnées individuellement par un code de transport de particules α basé sur la méthode de Monte-Carlo, les détecteurs du rayonnement alpha reliés à une même voie de mesure étant étalonnés de la même manière,
   le système étant **caractérisé en ce qu'**il comprend en outre un détecteur semiconducteur monocristallin, appelé détecteur de spectrométrie (15), destiné à être immergé dans l'effluent et permettant d'identifier et de quantifier la proportion des éléments émetteurs du rayonnement alpha présents dans l'effluent.

2. Système de mesure nucléaire du rayonnement alpha d'un effluent selon la revendication 1, dans lequel M est supérieur ou égal à 2.

3. Système de mesure nucléaire du rayonnement alpha d'un effluent selon la revendication 2, dans lequel P est égal à M.

4. Système de mesure nucléaire du rayonnement alpha d'un effluent selon l'une quelconque des revendications 1 à 3, dans lequel les M détecteurs du rayonnement alpha sont identiques.

5. Système de mesure nucléaire du rayonnement alpha d'un effluent selon la revendication 1, dans lequel le détecteur semiconducteur monocristallin est choisi parmi un détecteur semiconducteur CVD ou SOI diamant.

**6.** Système de mesure nucléaire du rayonnement alpha d'un effluent selon l'une quelconque des revendications 1 à 4, dans lequel, parmi les M détecteurs du rayonnement alpha, un détecteur du rayonnement alpha est monocristallin, est relié à une première voie de mesure, choisie parmi les P voies de mesure, qui fournit une valeur de l'activité alpha et est relié à une seconde voie de mesure, différente des P voies de mesure, qui fournit la spectrométrie de l'effluent.

**7.** Système de mesure nucléaire du rayonnement alpha d'un effluent selon la revendication 1, comprenant des moyens de maintien permettant de maintenir les M détecteurs du rayonnement alpha immergés et en des positions déterminées dans l'effluent.

**8.** Système de mesure nucléaire du rayonnement alpha d'un effluent selon la revendication 7, dans lequel les moyens de maintien maintiennent au moins deux détecteurs du rayonnement alpha à des hauteurs différentes dans l'effluent.

**9.** Système de mesure nucléaire du rayonnement alpha d'un effluent selon la revendication 7 ou la revendication 8, dans lequel les moyens pour maintenir les M détecteurs du rayonnement alpha sont un arbre comportant des ramifications au niveau desquelles sont disposés les M détecteurs du rayonnement alpha.

**10.** Système de mesure nucléaire du rayonnement alpha d'un effluent selon la revendication 7, dans lequel le détecteur de spectrométrie est fixé à l'un des moyens de maintien.

**11.** Procédé de mesure nucléaire in situ du rayonnement alpha d'un effluent, comprenant les étapes consistant à :

- immerger dans l'effluent M détecteurs semiconducteurs en diamant obtenus par dépôt chimique en phase vapeur ou en silicium recouvert d'une couche en diamant aptes à mesurer l'activité alpha de l'effluent, M étant un nombre entier supérieur ou égal à 1, les M détecteurs du rayonnement alpha étant reliés à P voies de mesure, P étant un nombre entier supérieur ou égal à 1 et inférieur ou égal à M, lesdits M détecteurs semiconducteurs étant appelés détecteurs du rayonnement alpha ;
- étalonner les M détecteurs du rayonnement alpha, les détecteurs reliés à une même voie de mesure étant étalonnés de la même manière, l'étalonnage étant réalisé par un code de transport de particules $\alpha$ basé sur la méthode de Monte-Carlo ;
- recueillir P valeurs du rayonnement alpha à l'aide des P voies de mesure reliées auxdits M détecteurs du rayonnement alpha, la $i^{ème}$ valeur recueillie (avec i=1 à P) correspondant soit à la valeur issue d'un seul détecteur du rayonnement alpha, si la voie de mesure correspondante n'est reliée qu'audit détecteur du rayonnement alpha, soit à la somme des valeurs issues des détecteurs du rayonnement alpha reliés par ladite voie de mesure ;
- si P est supérieur à 1, additionner les P valeurs d'activité alpha ;
le procédé comprenant en outre une étape consistant à réaliser une spectrométrie de l'effluent pour déterminer l'identité et la proportion des éléments émetteurs alpha présents dans l'effuent.

**12.** Procédé de mesure nucléaire du rayonnement d'un effluent selon la revendication 11, dans lequel les M détecteurs du rayonnement alpha sont disposés à des hauteurs différentes dans l'effluent.

**13.** Procédé de mesure nucléaire du rayonnement d'un effluent selon la revendication 11 ou la revendication 12, dans lequel, lorsque l'effluent comprend Q phases différentes, Q étant un nombre entier supérieur à 2, au moins deux détecteurs du rayonnement alpha sont immergés dans des phases différentes.

**14.** Procédé de mesure nucléaire du rayonnement d'un effluent selon la revendication 11, dans lequel l'étape consistant à réaliser la spectrométrie de l'effluent est réalisée en immergeant un détecteur semiconducteur monocristallin ou en silicium recouvert d'une couche en diamant dans l'effluent et en recueillant les valeurs fournies par ledit détecteur semiconducteur monocristallin ou en silicium recouvert d'une couche en diamant.

**Patentansprüche**

**1.** System zur nuklearen in-situ-Messung der alpha-Strahlung von Abwasser, enthaltend:

- M Halbleiterdetektoren aus Diamant, die durch chemische Dampfphasenabscheidung erhalten werden, oder aus Silicium, das mit einer Diamantschicht überzogen ist, alpha-Strahlungsdetektoren (5) genannt, die dazu bestimmt sind, in das Abwasser eingetaucht zu werden und dazu geeignet sind, eine von dem Abwasser abgegebene alpha-Strahlung direkt zu messen, wobei M eine ganze Zahl größer oder gleich 1 ist;
- P Messstellen (6), die mit den M alpha-Strahlungsdetektoren verbunden sind, wobei P eine ganze Zahl größer oder gleich 1 und kleiner oder gleich M ist, wobei jede der P Messstellen dazu geeignet ist, einen Wert oder eine Summe von Werten der alpha-Aktivität zu liefern, die von dem bzw. den alpha-Strahlungsdetektoren (5) stammen, mit denen sie verbunden sind,
wobei das System ferner dann, wenn P größer als 1 ist, ein Mittel zum Addieren der von den P Messstellen stammenden Resultate enthält,
und wobei die M Alpha-Strahlungsdetektoren (5) individuell mit einem $\alpha$-Teilchentransport-Code kalibriert sind, der auf der Monte-Carlo-Methode beruht, wobei die alpha-Strahlungsdetektoren, die mit einer gleichen Messstelle verbunden sind, auf gleiche Weise kalibriert sind,
wobei das System **dadurch gekennzeichnet ist, dass** es ferner einen monokristallinen Halbleiterdetektor, Spektrometrie-Detektor (15) genannt, enthält, der dazu bestimmt ist, in das Abwasser eingetaucht zu werden und gestattet, das Verhältnis der die Alpha-Strahlung emittierenden, in dem Abwasser vorhandenen Elemente zu identifizieren und zu quantifizieren.

2. System zur nuklearen Messung der alpha-Strahlung von Abwasser nach Anspruch 1, wobei M größer oder gleich 2 ist.

3. System zur nuklearen Messung der alpha-Strahlung von Abwasser nach Anspruch 2, wobei P gleich M ist.

4. System zur nuklearen Messung der alpha-Strahlung von Abwasser nach einem der Ansprüche 1 bis 3, wobei die M alpha-Strahlungsdetektoren identisch sind.

5. System zur nuklearen Messung der alpha-Strahlung von Abwasser nach Anspruch 1, wobei der monokristalline Halbleiterdetektor ausgewählt ist aus einem CVD oder SOI Halbleiterdetektor aus Diamant.

6. System zur nuklearen Messung der alpha-Strahlung von Abwasser nach einem der Ansprüche 1 bis 4, wobei unter den M alpha-Strahlungsdetektoren ein alpha-Strahlungsdetektor monokristallin ist, mit einer ersten Messstelle verbunden ist, die ausgewählt ist aus P Messstellen, einen Wert der alpha-Aktivität liefert und mit einer zweiten Messstelle verbunden ist, die sich von den P Messstellen unterscheidet und die Spektrometrie des Abwassers liefert.

7. System zur nuklearen Messung der alpha-Strahlung von Abwasser nach Anspruch 1, enthaltend Haltemittel, die gestatten, die M alpha-Strahlungsdetektoren eingetaucht und in bestimmten Positionen im Abwasser zu halten.

8. System zur nuklearen Messung der alpha-Strahlung von Abwasser nach Anspruch 7, wobei die Haltemittel zumindest zwei alpha-Strahlungsdetektoren in unterschiedlichen Höhen im Abwasser halten.

9. System zur nuklearen Messung der alpha-Strahlung von Abwasser nach Anspruch 7 oder Anspruch 8, wobei die Mittel zum Halten der M alpha-Strahlungsdetektoren ein Baum mit Verzweigungen sind, in deren Bereich die M alpha-Strahlungsdetektoren angeordnet sind.

10. System zur nuklearen Messung der alpha-Strahlung von Abwasser nach Anspruch 7, wobei der Spektrometrie-Detektor an einem der Haltemittel befestigt ist.

11. Verfahren zur nuklearen in-situ-Messung der alpha-Strahlung von Abwasser, umfassend die nachfolgenden Schritte:

- Eintauchen von M Halbleiter-Detektoren aus Diamant, die durch chemische Dampfphasenabscheidung erhalten wurden, oder aus Silicium, das mit einer Diamantschicht überzogen ist, die dazu geeignet sind, die alpha-Aktivität des Abwassers zu messen, wobei M eine ganze Zahl größer oder gleich 1 ist, wobei die M alpha-Strahlungsdetektoren mit P Messstellen verbunden sind, wobei P eine ganze Zahl größer oder gleich 1 und kleiner oder gleich M ist, wobei die M Halbleiter-Detektoren alpha-Strahlungsdetektoren genannt werden;
- Kalibrieren der M alpha-Strahlungsdetektoren, wobei die mit einer gleichen Messstelle verbundenen Detektoren auf gleiche Weise kalibriert werden, wobei die Kalibrierung durch einen $\alpha$-Teilchentransport-Code basierend auf der Monte-Carlo-Methode erfolgt;
- Aufnehmen von P Werten der alpha-Strahlung mit Hilfe der P Messstellen, die mit den M alpha-Strahlungsdetektoren verbunden sind, wobei der i-te aufgenommene Wert (mit i = 1 bis P) entweder dem von einem einzigen Alpha-Strahlungsdetektor stammenden Wert entspricht, wenn die entsprechende Messstelle nur mit dem alpha-Strahlungsdetektor verbunden ist, oder der Summe von Werten entspricht, die von den mit der Messstelle verbundenen Alpha-Strahlungsdetektoren stammen;

- wenn P größer als 1 ist, Addieren der P Alpha-Aktivitätswerte; wobei das Verfahren ferner einen Schritt umfasst, der darin besteht, eine Spektrometrie des Abwassers durchzuführen, um die Identität und das Verhältnis der im Abwasser vorhandenen, alpha-emittierenden Elemente zu ermitteln.

12. Verfahren zur nuklearen Messung der Strahlung von Abwasser nach Anspruch 11, wobei die M alpha-Strahlungsdetektoren in verschiedenen Höhen im Abwasser angeordnet sind.

13. Verfahren zur nuklearen Messung der Strahlung von Abwasser nach Anspruch 11 oder Anspruch 12, wobei dann, wenn das Abwasser Q verschiedene Phasen enthält, wobei Q eine ganze Zahl größer als 2 ist, zumindest zwei alpha-Strahlungsdetektoren in verschiedene Phasen eingetaucht werden.

14. Verfahren zur nuklearen Messung der Strahlung von Abwasser nach Anspruch 11, wobei der Schritt, der darin besteht, die Spektrometrie des Abwassers durchzuführen, dadurch erfolgt, dass ein Halbleiter-Detektor, der monokristallin oder aus Silicium überzogen mit einer Diamantschicht ist, in das Abwasser eingetaucht wird und indem die Werte aufgenommen werden, die von dem monokristallinen bzw. von dem aus mit einer Diamantschicht überzogenen Silicium bestehenden Halbleiter-Detektor geliefert werden.

## Claims

1. An in situ system for nuclear measurement of the alpha radiation of an effluent, including:

   - M diamond semiconductor detectors obtained by chemical vapour deposition, or silicon semiconductor detectors covered with a diamond layer, called alpha radiation detectors (5), intended to be immersed in the effluent, and able to measure directly alpha radiation emitted by said effluent, where M is an integer greater than or equal to 1;
   - P measuring channels (6) connected to the M alpha radiation detectors, where P is an integer greater than or equal to 1 and less than or equal to M, and where each of the P measuring channels is able to supply an alpha activity value or a sum of such values from the alpha radiation detector(s) (5) to which they are connected, wherein the system also includes, if P is greater than 1, a means for adding together the results from the P measuring channels
   and wherein the M alpha radiation detectors (5) are individually calibrated by an $\alpha$ particle transport code based on the Monte Carlo method, the alpha radiation detectors connected to a given measuring channel being calibrated in the same manner,
   the system being **characterised in that** it further includes a monocrystalline semiconductor detector, called a spectrometry detector (15), intended to be immersed in the effluent, and enabling the proportion of the alpha radiation emitter elements present in the effluent to be identified and quantified.

2. A system for nuclear measurement of the alpha radiation of an effluent according to claim 1, wherein M is greater than or equal to 2.

3. A system for nuclear measurement of the alpha radiation of an effluent according to claim 2, wherein P is equal to M.

4. A system for nuclear measurement of the alpha radiation of an effluent according to any one of claims 1 to 3, wherein the M alpha radiation detectors are identical.

5. A system for nuclear measurement of the alpha radiation of an effluent according to claim 1, wherein the monocrystalline semiconductor detector is chosen from among a diamond CVD or SOI semiconductor detector.

6. A system for nuclear measurement of the alpha radiation of an effluent according to any one of claims 1 to 4, wherein, among the M alpha radiation detectors, one alpha radiation detector is monocrystalline, and is connected to a first measuring channel, chosen from among the P measuring channels, which supplies a value of the alpha activity and is connected to a second measuring channel, different from the P measuring channels, which provides the spectrometry of the effluent.

7. A system for nuclear measurement of the alpha radiation of an effluent according to claim 1, including holding means enabling the M alpha radiation detectors to be held immersed, and in determined positions in the effluent.

8. A system for nuclear measurement of the alpha radiation of an effluent according to claim 7, wherein the holding means hold at least two alpha radiation detectors at different heights in the effluent.

9. A system for nuclear measurement of the alpha radiation of an effluent according to claim 7 or claim 8, wherein the means for holding the M alpha radiation detectors are a shaft including branches where the M alpha radiation detectors are positioned.

10. A system for nuclear measurement of the alpha radiation of an effluent according to claim 7, wherein the spectrometry detector is attached to one of the holding means.

11. A method for in situ nuclear measurement of the alpha radiation of an effluent, including the steps consisting in:

- immersing in the effluent M diamond semiconductor detectors obtained by chemical vapour deposition, or silicon semiconductor detectors covered with a diamond layer, able to measure the effluent's alpha activity, where M is an integer greater than or equal to 1, where the M alpha radiation detectors are connected to P measuring channels, where P is an integer greater than or equal to 1 and less than or equal to M, and where said M semiconductor detectors are called alpha radiation detectors;
- calibrating the M alpha radiation detectors, where the detectors connected to a given measuring channel are calibrated in the same manner, and where the calibration is undertaken by an $\alpha$ particle transport code based on the Monte Carlo method;
- detecting P values of the alpha radiation using the P measuring channels connected to said M alpha radiation detectors, where the $i^{th}$ value detected (where i=1 to P) is equal either to the value resulting from a single alpha radiation detector, if the corresponding measuring channel is connected only to said alpha radiation detector, or to the sum of the values from the alpha radiation detectors connected by said measuring channel;
- if P is greater than 1, adding together the P alpha activity values.
the method further including a step consisting in performing a spectrometry of the effluent in order to determine the identity and proportion of the alpha emitter elements present in the effluent.

12. A method for nuclear measurement of the alpha radiation of an effluent according to claim 11, wherein the M alpha radiation detectors are positioned at different heights in the effluent.

13. A method for nuclear measurement of the radiation of an effluent according to claim 11 or claim 12, wherein, when the effluent includes Q different phases, Q being an integer greater than or equal to 2, at least two alpha radiation detectors are immersed in different phases.

14. A method for nuclear measurement of the radiation of an effluent according to claim 11, wherein the step consisting in performing the spectrometry of the effluent is accomplished by immersing a monocrystalline semiconductor detector, or silicon semiconductor detector covered with a diamond layer, in the effluent, and by detecting the values supplied by said monocrystalline semiconductor detector or silicon semiconductor detector covered with a diamond layer.

FIG.1

Unité arbitraire

Energie (keV)

FIG.2

FIG.3

FIG.4

**RÉFÉRENCES CITÉES DANS LA DESCRIPTION**

**Littérature non-brevet citée dans la description**

- **VOJTYLA P.** Calibration of monitors used for survellance of radioactivity in effluent water from CERN's accelerator installations. *Applied Radiation and Isotopes,* 2001, vol. 55, 81-88